# FASCICULE DE BREVET EUROPEEN

(11) **EP 1 223 786 B1**
(45) Date de publication et mention de la délivrance du brevet: **10.12.2003**
(21) Numéro de dépôt: 01402695.9
(22) Date de dépôt: 18.10.2001
(51) Int. Cl.: H04Q 11/00

(54) **Dispositif de commutation photonique**
Optische Schaltvorrichtung
Optical switching apparatus

(30) Priorité: 15.01.2001 FR 0100460
(43) Date de publication de la demande: 17.07.2002
(73) Titulaire: ALCATEL, 75008 Paris (FR)
(72) Inventeur: Dotaro, Emmanuel, 91370 Verrieres Le Buisson (FR); Le Sauze, Nicolas, 91440 Bures-Sur-Yvette (FR)
(74) Mandataire: Sciaux, Edmond

(56) Documents cités:
- EP-A- 0 790 750
- HUNTER D K ET AL: "BUFFERING IN OPTICAL PACKET SWITCHES" JOURNAL OF LIGHTWAVE TECHNOLOGY, IEEE. NEW YORK, US, vol. 16, no. 12, décembre 1998 (1998-12), pages 2081-2094, XP000833955 ISSN: 0733-8724

## Description

La présente invention concerne un dispositif de commutation photonique permettant de commuter des données se présentant sous forme de signaux optiques numériques constituant des paquets optiques.

Un paquet optique est typiquement une PDU, acronyme pour l'expression anglo-saxonne « Protocol Data Unit », qui peut être dans le cadre de la présente demande soit fixe, soit variable. Ceci n'implique par conséquent aucune hypothèse restrictive concernant le format du paquet optique et la manière dont le paquet est rempli.

Un paquet optique arrivant sur un port d'entrée d'une matrice de commutation contient des indications d'acheminement exploitables pour acheminer le paquet, au sein de la matrice de commutation, vers un ou plusieurs ports de sortie.

Une matrice de commutation photonique comprend plusieurs ports d'entrée et plusieurs ports de sortie. Il peut alors se produire que des paquets optiques de plusieurs ports d'entrée doivent être commutées vers un même port de sortie. Plusieurs paquets optiques peuvent ainsi se présenter ensemble et être destinés à un même port de sortie, créant un phénomène de conflit appelé contention.

Ce problème de contention est résolu de manière connue dans l'état de la technique par la mise en oeuvre de mémoires tampons. On peut ainsi disposer des mémoires tampons à l'intérieur de la matrice de commutation. Dans ce type de matrice de commutation dotée d'une mémoire tampon centralisée, les données optiques fournies par les ports d'entrée sont mémorisées lorsqu'elles se présentent, puis sont fournies une à une aux accès de sortie. La mémoire tampon est commandée en fonction d'informations de routage indiquant, pour chaque donnée à commuter, le port de sortie de la matrice à laquelle cette donnée est destinée. Des moyens de commande permettent également de sélectionner la durée de stockage dans la mémoire tampon de manière à constituer une file d'attente pour chaque sortie, évitant des conflits entre deux données à commuter vers une même sortie, et qui se présentent en même temps à l'entrée de la matrice de commutation.

Dans son acheminement entre un port d'entrée et un port de sortie, la donnée optique est donc aiguillée vers une mémoire tampon optique commune à toutes les sorties de la matrice, où elle est stockée pendant une durée sélectionnable entre O et K.Tc, K étant un nombre entier et Tc étant la durée d'une donnée. La durée d'une donnée est le temps nécessaire pour transmettre une donnée sur un port de sortie. Une mémoire tampon est constituée de lignes optiques à retard qui permettent de fournir à un même accès de sortie des données échelonnées dans le temps.

Cependant, ce type d'architecture, où la résolution de la contention se fait dans la matrice elle-même, présente un certain nombre d'inconvénients. Notamment, ce type d'architecture impose que tout le trafic passe dans les mémoires. Or, la mémoire étant une ressource rare en optique, cette architecture est déficiente en terme de partage de multiplexage statistique. De plus, étant consommatrice de ressources mémoire, l'architecture de l'art antérieur présentée ci-dessus est coûteuse et complexe à mettre en oeuvre.

Par ailleurs, il existe des architectures où la mémoire est externe à la matrice de commutation

L'invention concerne ce dernier type d'architecture où la mémoire est externe à la matrice de commutation comme décrit dans le document EP 790 750.

Dans les architectures connues de l'art antérieur de ce type, la mémoire est partagée pour tout le trafic en conflit. Ainsi, seul le trafic en conflit utilise la ressource mémoire. De plus, certains ports de sortie de la matrice de commutation sont dédiés spécifiquement à l'accès à la mémoire.

Avec ce type d'architecture, quand un phénomène de contention se produit, les paquets optiques pouvant être commutés sont envoyés sur les lignes normales et un certain nombre de ports dédiés à l'accès à la mémoire sont rajoutés.

Par conséquent, la taille de la matrice augmente de manière à permettre un accès suffisamment large à la mémoire tout en gardant des performances acceptables en terme de débit moyen admissible par accès d'entrée.

Un des inconvénients importants de ce type d'architecture avec une mémoire externe à la matrice et des ports dédiés pour accéder à la mémoire est donc qu'elle nécessite une augmentation de l'ordre de 20 à 25% de la taille de la matrice pour avoir des performances de commutation correctes.

Aussi, le problème que se propose de résoudre l'invention est de mettre en oeuvre une matrice de commutation photonique où il n'y a plus de contention entre les paquets optiques, tout en palliant les inconvénients de l'art antérieur exposés ci-dessus, qui se rapportent notamment à l'utilisation de la ressource mémoire et à la taille de la matrice de commutation. Le but de l'invention est donc de proposer une matrice de commutation photonique plus simple et moins coûteuse que les matrices de type connu.

A cet effet, l'invention part du constat qu'il n'y a pas plus de trafic qui sort d'un noeud que de trafic qui rentre dans le noeud. Ainsi, quand un phénomène de contention se produit, il y a autant de ports de sortie libres que de paquets optiques en contention. L'invention consiste alors à utiliser ces ports de sortie existants pour accéder à la mémoire. Pour ce faire, une fonction de commutation 1 vers 2 est prévue derrière les ports de sortie de la matrice. De cette façon, tous les ports de sortie de la matrice sont un accès potentiel à la mémoire.

L'objet de l'invention est donc un dispositif de commutation photonique, pour commuter sans contention des données sous la forme de paquets optiques, ledit dispositif comprenant une matrice de commutation spatiale avec plusieurs ports d'entrée et plusieurs ports de sortie, un bloc externe à ladite matrice de commutation spatiale constitué d'une mémoire tampon commune à tous lesdits ports de sortie de ladite matrice, caractérisé en ce que chacun desdits ports de sortie permet d'accéder à la mémoire tampon par l'intermédiaire d'un étage de commutation spatiale constitué de commutateurs assurant une fonction de commutation spatiale 1 vers 2.

L'invention sera mieux comprise et d'autres caractéristiques et avantages apparaîtront plus clairement à l'aide de la description ci-dessous d'un exemple de réalisation de l'invention en référence à la figure suivante :

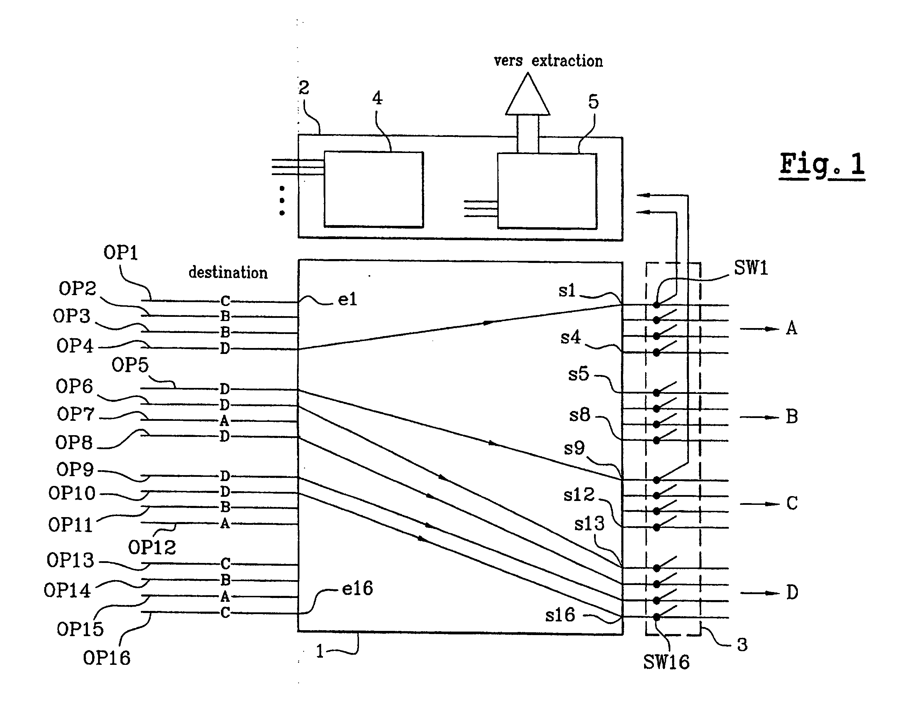

- la figure 1 est une représentation schématique du dispositif de commutation photonique selon la présente invention.

La figure 1 montre donc une matrice de commutation spatiale 1 NXN. Dans l'exemple de la figure 1, N est pris égal à 16. La matrice 1 est donc dotée de 16 ports d'entrée e1,..., e16 et de 16 ports de sortie s1,..., S16. Parmi les 16 ports de sortie de la matrice, les ports de sortie s1 à s4 sont dédiés à la destination A, les ports s5 à s8 à la destination B, les ports s9 à s12 à la destination C et enfin les ports s13 à s16 à la destination D.

Un bloc 2, externe à la matrice de commutation spatiale 1, est constitué d'une mémoire tampon optique 4 commune à toutes les sorties de la matrice 1. La mémoire 4, externe à la matrice, est prévue pour retarder sélectivement chaque paquet optique en contention, c'est à dire les paquets en conflit à commuter vers une même destination.

De préférence, la mémoire est constituée de lignes optiques à retard. Un émetteur optique, non représenté sur la figure 1, est placé derrière la mémoire et permet de régénérer les paquets optiques stockés dans la mémoire pour les envoyer vers des accès d'entrée, dits de recirculation, de la matrice 1.

Chacun des ports de sortie s1 à s16 est doté d'une fonction de commutation spatiale 1 vers 2. Pour ce faire le dispositif comprend un étage de commutation spatial 3 constitué de 16 commutateurs 1 vers 2 SW1 à SW16. Chaque port de sortie s 1 à s 16 de la matrice 1 permet donc d'accéder à la mémoire tampon 4 par l'intermédiaire de l'étage de commutation spatiale 3 constitué des commutateurs, respectivement SW1 à SW16, assurant une fonction de commutation spatiale 1 vers 2.

Seize paquets optiques OP1 à OP16 arrivent respectivement sur les seize ports d'entrée e1 à e16 de la matrice de commutation photonique 1.

Dans l'exemple de la figure 1, il se produit un conflit entre des paquets optiques pour ce qui concerne la destination D. En effet, six paquets optiques qui arrivent en même temps respectivement OP4, OP5, OP6, OP8, OP9 et OP10 sont prévus pour être commutés à destination de l'accès de sortie D de la matrice 1. Or, quatre ports de sortie uniquement sont disponibles, respectivement s 13 à s16.

Tout d'abord, tous les paquets optiques en transit qui peuvent être traités sans contention sont affectés aux ports de sortie de la matrice dédiés à la destination D. Ainsi, les paquets optiques OP6, OP8, OP9 et OP10 sont respectivement affectés aux ports de sortie s13 à s16 de la matrice 1.

Par ailleurs, les deux paquets optiques restant OP4 et OP5, qui sont des paquets optiques en conflit à commuter vers la même destination D, sont affectés à des ports de sortie libres de la matrice, à savoir s1 et s9 selon l'exemple de la figure 1, de façon à pouvoir accéder à la mémoire 2.

En effet, si on reprend le postulat de départ de l'invention, il ne peut y avoir plus de trafic entrant que de trafic sortant d'un noeud d'où lorsqu'un phénomène de contention a lieu, il y a autant de ports de sortie libres que de paquets optiques en contention.

Ainsi, les ports de sortie s1 et s9 qui sont des ports existants de la matrice 1 et qui ne sont pas utilisés quand il y a contention, permettent d'accéder à la mémoire par l'intermédiaire des commutateurs SW1 et SW9.

Tous les ports de sortie existants s1 à s16 de la matrice 1 deviennent donc un accès potentiel à la mémoire grâce aux commutateurs SW1 à SW16 ajoutée derrière chacun d'eux. Il n'est donc pas nécessaire de prévoir des ports spécialement dédiés à l'accès à la mémoire.

Plusieurs solutions peuvent être envisagées pour mettre en oeuvre la fonction de commutation des commutateurs SW1 à SW16 permettant aux paquets optiques en conflit d'accéder à la mémoire à partir des ports de sortie existants de la matrice de commutation photonique.

La régénération du signal optique peut ainsi être réalisée au moyen d'un commutateur optoélectronique. Un tel dispositif comprend un récepteur optique de type photodiode par exemple, et un émetteur optique de type diode lumineuse ou diode laser et jouant le rôle de source de lumière. La régénération étant basée sur des composants optoélectroniques, l'information peut être directement dérivée vers la mémoire tampon juste avant l'émetteur optique. Dans ce cas, il s'agit d'une mémoire tampon de type électronique.

Selon un autre mode de réalisation, la fonction de commutation placée derrière chacun des ports de sortie de la matrice est réalisée en mettant en oeuvre des interrupteurs optiques de type amplificateurs optiques. Un amplificateur optique laisse passer le signal lorsqu'il est allumé et l'élimine de la liaison optique sur laquelle il est disposé lorsqu'il est éteint.

Enfin, un autre mode de réalisation de la fonction de commutation consiste à capturer simplement le signal et à le commuter à destination de la mémoire optique.

Les commutateurs SW1 à SW16 placés derrière chaque port de sortie s1 à s16 de la matrice permettent donc aux paquets optiques en contention d'accèder à la mémoire à travers les ports de sortie déjà existants de la matrice.

Il n'est donc pas nécessaire de prévoir des ports de sortie spécialement dédiés à l'accès à la mémoire. En effet, selon le principe de base de l'invention, du fait qu'il n'y a pas plus de trafic qui sort du noeud que de trafic qui rentre dans le noeud, il y a autant de ports de sortie libres que de paquets optiques en contention.

Ces ports de sortie libres sont alors utilisés pour accéder à la mémoire par l'intermédiaire des commutateurs placés derrière eux.

Ce même principe peut également être appliqué pour l'accès aux ports d'extraction qui est également une source de perte de paquets optiques dans les architectures de l'art antérieur du fait des problèmes de contention.

Ainsi, les ports de sortie de la matrice qui se retrouvent libres lorsque des paquets optiques sont en contention, peuvent être utilisés non seulement pour l'accès à la mémoire, mais également pour l'accès vers les ports d'extraction.

Par conséquent, dans ce mode de réalisation particulier de l'invention un bloc commutateur 5 est mis en oeuvre entre l'étage de commutation spatiale 3 et la mémoire 4 pour différencier d'une part, le trafic destiné à l'extraction et, d'autre part, le trafic qui doit aller à travers la mémoire 4 pour être retardé.

Pour obtenir une matrice fonctionnant avec zéro contention, le commutateur 5 est constitué d'autant de commutateurs élémentaires 1 vers 2 qu'il y a de ports de sortie sur la matrice 1. Dans l'exemple de la figure 1, le commutateur 5 est donc constitué de 16 commutateurs élémentaires 1 vers 2. Pour généraliser, soit N le nombre de ports d'entrée et de sortie de la matrice de commutation 1, le commutateur 5 est alors constitué de w commutateurs élémentaires, avec w=N.

Le dispositif de commutation photonique selon l'invention permet donc de supprimer le problème de contention entre paquets optiques. Un autre avantage du dispositif selon l'invention est de permettre d'obtenir une taille de la matrice de commutation environ 20% inférieure par rapport aux architectures de l'art antérieur, tout en améliorant les performances et le coût.

## Revendications

1. Dispositif de commutation photonique, pour commuter sans contention des données sous la forme de paquets optiques (OP1,...,OP16), ledit dispositif comprenant une matrice de commutation spatiale (1) avec plusieurs ports d'entrée (e1,...,e16) et plusieurs ports de sortie (s1,...s16), un bloc (2) externe à ladite matrice de commutation spatiale (1 ) constitué d'une mémoire tampon (4) commune à tous lesdits ports de sortie (s1,...,s16) de ladite matrice (1), **caractérisé en ce que** chacun desdits ports de sortie (s1,...s16) permet d'accéder à la mémoire tampon (4) par l'intermédiaire d'un étage de commutation spatiale (3) constitué de commutateurs (SW1,...SW16) assurant une fonction de commutation spatiale 1 vers 2.

2. Dispositif selon la revendication 1, **caractérisé en ce que** la mémoire (4) est constituée de lignes optiques à retard.

3. Dispositif selon la revendication 1 ou 2, **caractérisé en ce que** la fonction de commutation spatiale 1 vers 2 de chacun des ports de sortie (s1,...s16) de la matrice (1) est mise en oeuvre au moyen d'interrupteurs de type amplificateurs optiques.

4. Dispositif selon la revendication 1, **caractérisé en ce que** la fonction de commutation spatiale 1 vers 2 de chacun des ports de sortie (s1,..., S16) de la matrice (1) est mise en oeuvre au moyen d'un commutateur optoélectronique comprenant un récepteur optique de type photodiode et un émetteur optique de type diode lumineux ou diode laser.

5. Dispositif selon la revendication 4, **caractérisé en ce que** la mémoire tampon (4) est une mémoire de type électronique.

6. Dispositif selon l'une des revendications précédentes, **caractérisé en ce qu'**il comprend en plus un bloc commutateur (5) disposé entre l'étage de commutation spatiale (3) et la mémoire (4) de façon à différencier d'une part, le trafic destiné à l'extraction et, d'autre part, le trafic devant passer dans ladite mémoire (4) pour être retardé.

7. Dispositif selon la revendication 6, **caractérisé en ce que** le bloc commutateur (5) est constitué d'autant de commutateurs élémentaires 1 vers 2 qu'il y a de ports de sortie sur la matrice de commutation spatiale (1).

## Claims

1. A photonic switching device for switching without contention data in the form of optical packets (OP1, ..., OP16), said device including a space switching matrix (1) with a plurality of input ports (e1, ..., e16) and a plurality of output ports (s1, ..., s16) and a unit (2) external to said space switching matrix (1) including a buffer memory (4) common to all said output ports (s1, ..., s16) of said matrix (1), **characterized in that** each of said output ports (s1, ..., s16) provides access to the buffer memory (4) via a space switching stage (3) consisting of switches (SW1, ..., SW16) having a 1-to-2 space switching function.

2. A device according to claim 1 **characterized in that** the buffer memory (4) consists of optical delay lines.

3. A device according to claim 1 or claim 2 **characterized in that** the 1-to-2 space switching function of each of the output ports (s1, ..., s16) of the matrix (1) is implemented by means of optical amplifier switches.

4. A device according to claim 1 **characterized in that** the 1-to-2 space switching function of each of the output ports (s1, ..., s16) of said matrix (1) is implemented by means of an opto-electronic switch including a photodiode optical receiver and a light-emitting diode or laser diode optical emitter.

5. A device according to claim 4 **characterized in that** the buffer memory (4) is an electronic buffer memory.

6. A device according to any of the previous claims **characterized in that** it further includes a switch unit (5) disposed between the space switching stage (3) and the buffer memory (4) to differentiate traffic intended for extraction and traffic having to enter said buffer memory (4) to be delayed.

7. A device according to claim 6 **characterized in that** the switch unit (5) consists of as many individual 1-to-2 switches as there are output ports in the space switching matrix (1).

## Patentansprüche

1. Optische Schaltvorrichtung, um ohne Konflikt Daten in Form optischer Pakete (OP1, ... OP16) zu schalten, wobei diese Vorrichtung eine räumliche Schaltmatrix (1) mit mehreren Eingangs-Ports (e1, ..., e16) und mehreren Ausgangs-Ports (s1, ..., s16), und einen Block (2) außerhalb der genannten räumlichen Schaltmatrix (1) aufweist, der aus einem allen Ausgangs-Ports (s1,..., s16) der Matrix gemeinsamen Pufferspeicher (4) besteht, **dadurch gekennzeichnet, dass** jeder dieser Ausgangs-Ports den Zugang zum Pufferspeicher (4) über eine räumliche Schaltstufe (3) ermöglicht, die aus Schaltern (SW1, ..., SW 16) besteht, welche eine räumliche Schaltfunktion "von 1 nach 2" erfüllen.

2. Vorrichtung nach Anspruch 1, **dadurch gekennzeichnet, dass** der Speicher (4) aus optischen Verzögerungsleitungen besteht.

3. Vorrichtung nach Anspruch 1 oder 2, **dadurch gekennzeichnet, dass** die räumliche Schaltfunktion "von 1 nach 2" jedes der Ausgangs-Ports (s1, ..., s16) der Matrix (1) mit Hilfe von Schaltern des Typs "optische Verstärker" realisiert wird.

4. Vorrichtung nach Anspruch 1, **dadurch gekennzeichnet, dass** die räumliche Schaltfunktion "von 1 nach 2" jedes der Ausgangs-Ports (s1, ..., s16) der Matrix (1) mit Hilfe eines optoelektronischen Schalters realisiert wird, der einen optischen Empfänger des Typs "Photodiode" und einen optischen Sender des Typs "Leuchtdiode" oder "Laserdiode" aufweist.

5. Vorrichtung nach Anspruch 4, **dadurch gekennzeichnet, dass** der Pufferspeicher (4) ein Speicher des elektronischen Typs ist.

6. Vorrichtung nach einem der vorhergehenden Ansprüche, **dadurch gekennzeichnet, dass** sie zusätzlich einen Schaltblock (5) ausweist, der zwischen der räumlichen Schaltstufe (3) und dem Speicher (4) in der Weise angeordnet ist, dass zwischen dem zur Ausgabe bestimmten Verkehr einerseits und andererseits dem Verkehr unterschieden wird, der in den genannten Speicher (4) gelangen muss, um verzögert zu werden.

7. Vorrichtung nach Anspruch 6, **dadurch gekennzeichnet, dass** der Schaltblock (5) aus so vielen Elementarschaltern "von 1 nach 2" besteht, wie Ausgangs-Ports an der räumlichen Schaltmatrix (1) vorhanden sind.
